# EUROPEAN PATENT APPLICATION

(11) **EP 4 579 865 A1**
(43) Date of publication of application: **02.07.2025**
(21) Application number: 24856827.1
(22) Date of filing: 22.08.2024
(51) Int. Cl.: H01M 10/0587, H01M 50/107, H01M 10/052

(54) **JELLY-ROLL TYPE ELECTRODE ASSEMBLY, MANUFACTURING METHOD FOR JELLY-ROLL TYPE ELECTRODE ASSEMBLY, AND SECONDARY BATTERY COMPRISING SAME**

(30) Priority: 22.08.2023 KR 20230110013
(71) Applicant: LG Energy Solution, Ltd., Seoul 07335 (KR)
(72) Inventor: NOH, Jaekyo, Daejeon 34122 (KR); SIM, Hyeonsoo, Daejeon 34122 (KR)
(74) Representative: Goddar, Heinz J.
(86) International application number: PCT/KR2024/012512
(87) International publication number: WO 2025/042216

(57) **Abstract**

A jelly-roll electrode assembly may include a first separator, a negative electrode, a second separator, and a positive electrode, which are sequentially laminated and wound. A core portion of the jelly-roll electrode assembly includes a rigid film disposed between the first separator and th second separator. A length of the rigid film in a longidudinal direction may be from 100% to 150% of an inner circumference of the jelly-roll electrode assembly and a tensile strength of the rigid film may be from 18 kgf/mm² to 25 kgf/mm². A secondary batter may include the jelly-roll electrode assembly, and the jelly-roll electrode assembly may be manufactured by a method described herein.

## Description

### Technical Field

The present disclosure relates to a jelly-roll type electrode assembly, a method for manufacturing a jelly-roll type electrode assembly, and a secondary battery including the same and, specifically, to a jelly-roll type electrode assembly including a rigid film, a method for manufacturing a jelly-roll type electrode assembly, and a cylindrical secondary battery including the same.

### Background

For a cylindrical battery, a jelly-roll type electrode assembly is manufactured by rolling a long electrode having a predetermined width in a roll form. A cylindrical battery manufactured by inserting such a jelly-roll type electrode assembly into a battery case undergoes repeated contraction/expansion of electrodes during charging and discharging. In particular, when the degree of contraction/expansion of the electrode assembly increases due to a tab (in tab) located in the core of the jelly-roll type electrode assembly or a silicon-based active material added in a negative electrode, the pressure acting on a core portion of the electrode assembly greatly increases.

Meanwhile, the core portion of the cylindrical battery has a space where a mandrel used for winding of the jelly-roll type electrode assembly is located, wherein the space is an empty space used in the assembling of the cylindrical battery, such as an insertion process of the jelly-roll type electrode assembly into a battery case and a welding process, that is, a hollow section of the core portion.

With the recent increase in low-resistance/high-capacity designs, jelly-roll type electrode assemblies are increasingly incorporating a plurality of tabs or undergoing the addition of silicon-based active materials. This has increased the likelihood of deformation in the core portion of an electrode assembly due to the contraction/expansion of the electrode assembly, and specifically, core deformation, that is, the collapsing of the hollow section of the core portion and its failure to maintain a circular shape, resulted in the deterioration in battery service life, and also caused the breakage of a separator located between the negative and positive electrodes, thus incurring heat generation and ignition due to internal short circuits caused by direct contact between the negative electrode and the positive electrode.

To address the issues of battery service life deterioration, separator breakage, and internal circuit short occurrence, resulting from the deformation of the electrode assembly, there is a need for the development of a technique capable of supporting the hollow section of the core portion in the corresponding area to maintain its circular shape and suppressing internal short circuits.

### Summary

### Technical Problem

An aspect of the present disclosure is to provide a jelly-roll type electrode assembly adopting a modified design, a method for manufacturing a jelly-roll type electrode assembly, and a secondary battery including the same.

However, the technical aspects of the present disclosure are not limited to the above-mentioned aspect, and other technical aspects not mentioned will be clearly understood by a person skilled in the art from the following description.

### Technical Solution

In accordance with an aspect of the present disclosure, there is provided a jelly-roll type electrode assembly, including a first separator, a negative electrode, a second separator, and a positive electrode, which are sequentially laminated and wound, wherein: a core portion of the jelly-roll type electrode assembly includes a rigid film disposed between the first separator and the second separator; the length in the longitudinal direction of the rigid film is 100% to 150% based on 100% of the inner circumference of the jelly-roll type electrode assembly; and the tensile strength of the rigid film is 18 kgf/mm² to 25 kgf/mm².

In accordance with another aspect of the present disclosure, there is provided a method for manufacturing a jelly-roll type electrode assembly including a first separator, a negative electrode, a second separator, and a positive electrode, which are sequentially laminated and wound, the method including: (a) winding a first separator and a second separator; (b) introducing a rigid film between the first separator and the second separator; (c) introducing a negative electrode; and (d) introducing a positive electrode, wherein: the length in the longitudinal direction of the rigid film is 100% to 150% based on 100% of the inner circumference of the jelly-roll type electrode assembly; and the tensile strength of the rigid film is 18 kgf/mm² to 25 kgf/mm².

In accordance with still another aspect of the present disclosure, there is provided a secondary battery including: the jelly-roll type electrode assembly; and a battery case for accommodating the electrode assembly.

### Advantageous Effects

The jelly-roll type electrode assembly according to an aspect of the present disclosure includes a rigid film with a predetermined degree of rigidity in the core portion, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

The method for manufacturing a jelly-roll type electrode assembly according to an aspect of the present disclosure can produce a jelly-roll type electrode assembly including a rigid film with a predetermined degree of rigidity through a continuous process using existing roll-to-roll processing equipment, thereby ensuring productivity and economic efficiency.

Furthermore, in the secondary battery according to the present disclosure, the hollow section of the core portion is supported to maintain its circular shape even in the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

The advantageous effects of aspects of the present disclosure are not limited to the above-described advantageous effects, and unstated advantageous effects will be clearly understood by a person skilled in the art from the present disclosure and the accompanying drawings.

### Brief Description of the Drawings

FIG. 1 shows a jelly-roll type electrode assembly including a rigid film according to an aspect of the present disclosure.
FIG. 2 schematically shows a method for manufacturing a jelly-roll type electrode assembly including a rigid film according to an aspect of the present disclosure.
FIGS. 3 and 4 are CT images showing the long-term cycle evaluation results of jelly-roll type electrode assemblies of Examples 1 and 2.
FIGS. 5, 6, and 7 are CT images showing the long-term cycle evaluation results of jelly-roll type electrode assemblies of Comparative Examples 1 to 3.

### Detailed Description

Throughout the present disclosure, unless explicitly described to the contrary, the word "comprise", "include", or "contain" and variations thereof, such as "comprising" "including", or "containing" will be understood to imply the further inclusion of stated elements, not the exclusion of any other elements.

Throughout the present disclosure, when one member is disposed "on" another member, this includes not only a case where the one member is brought into contact with another member, but also a case where still another member is present between the two members.

Throughout the present disclosure, the term "rigid film" refers to a film that has a predetermined degree of rigidity required for supporting a core portion of a jelly-roll type electrode assembly, that is, a rigidity of a specific value or more, and may refer to a film having a tensile strength of 18 kgf/mm² or more.

According to an aspect of the present disclosure, a jelly-roll type electrode assembly is provided including a first separator, a negative electrode, a second separator, and a positive electrode, which are sequentially laminated and wound, wherein: a core portion of the jelly-roll type electrode assembly includes a rigid film disposed between the first separator and the second separator; the length in the longitudinal direction of the rigid film is 100% to 150% based on 100% of the inner circumference of the jelly-roll type electrode assembly; and the tensile strength of the rigid film is 18 kgf/mm² to 25 kgf/mm².

The jelly-roll type electrode assembly according to an aspect of the present disclosure includes a rigid film with a predetermined degree of rigidity in the core portion, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

According to an aspect of the present disclosure, the core portion of the jelly-roll type electrode assembly may include a rigid film disposed between the first separator and the second separator. As used herein, the term "core portion" refers to a region including: a hollow section located at the winding axis of the electrode assembly; and a part of the lamination structure of the wound electrode assembly, and may refer to an area from one end portion in the longitudinal direction of the negative electrode, which is located at the innermost part of the electrode assembly, to end portions of the first separator and the second separator. The core portion may refer to an area within 3 turns from one end portion in the longitudinal direction of the negative electrode.

According to an aspect of the present disclosure, the core portion of the jelly-roll type electrode assembly may not include the positive electrode and the negative electrode. In other words, the core portion of the jelly-roll type electrode assembly may be composed of the first separator, the rigid film, and the second separator.

In an aspect of the present disclosure, one surface and the other surface of the rigid film may not be in direct contact with the negative electrode nor the positive electrode. In other words, one surface and the other surface of the rigid film may be in direct contact with a separator, wherein the separator may include a first separator and a second separator.

Such a configuration can minimize the reduced charge/discharge capacity due to a decreased negative electrode area receiving lithium ions, hindered electrolyte impregnation, or other problems, even when the rigid film is included in the core portion of the jelly-roll type electrode assembly.

According to an aspect of the present disclosure, the core portion of the jelly-roll type electrode assembly may include a rigid film disposed between the first separator and the second separator, and may include: a first area having a lamination structure of a first separator and a second separator; and a second area having a lamination structure of a first separator, a rigid film, and a second separator.

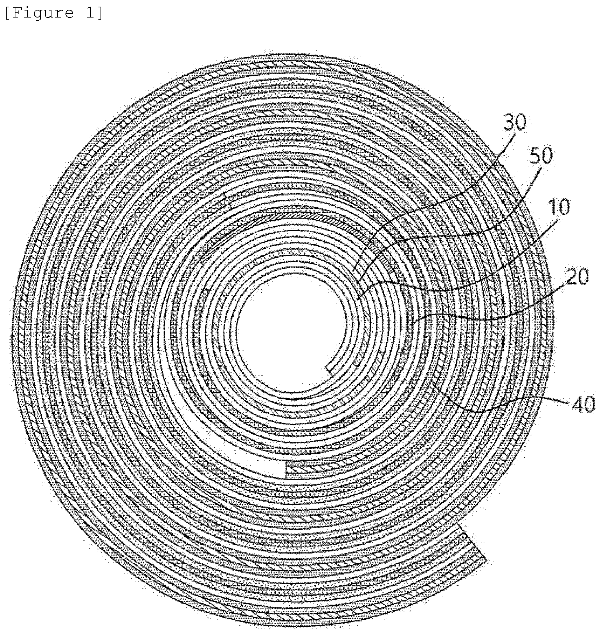

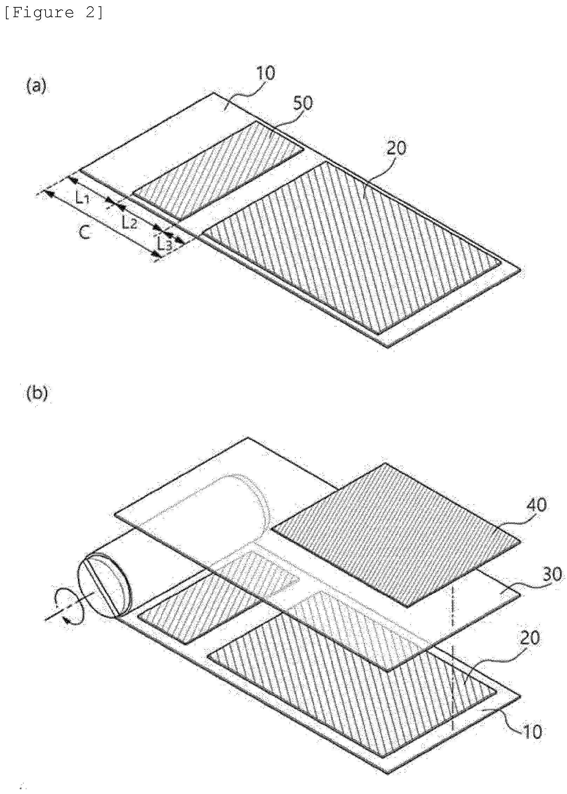

FIG. 1 shows a jelly-roll type electrode assembly including a rigid film according to an aspect of the present disclosure, and FIG. 2 schematically shows a method for manufacturing a jelly-roll type electrode assembly including a rigid film according to an aspect of the present disclosure.

Referring to FIGS. 1 and 2, a core portion of the jelly-roll type electrode assembly may include: a first area having a lamination structure of a first separator and a second separator; and a second area having a lamination structure of a first separator, a rigid film, and a second separator. Specifically, the core portion (C) of the jelly-roll type electrode assembly may include a rigid film disposed between the first separator and the second separator, and thus may include: a first area having a lamination structure of a first separator and a second separator; and a second area having a lamination structure of a first separator, a rigid film, and a second separator. More specifically, the length in the longitudinal direction of the first area may be L1, and the length in the longitudinal direction of the second area may be L2. The core portion (C) may mean a region having a sum of the length L1 in the longitudinal direction of the first area and the length L2 in the longitudinal direction of the second area, that is, the length in the longitudinal direction of L1+L2, with L3=0.

In such a case, one end portion in the longitudinal direction of the rigid film and one end portion in the longitudinal direction of the negative electrode may be in contact with each other, and as described below, the step difference can be minimized by adjusting the thickness range of the rigid film. In other words, local problems can be minimized, such as, the formation of step difference due to the thickness difference between the rigid film and the negative electrode and the precipitation of lithium in the step difference formation area.

According to an aspect of the present disclosure, the length in the longitudinal direction of the first area may be 1 turn to 1.7 turns. Specifically, the length L1 in the longitudinal direction of the first area may be 1.1 turns or more, 1.2 turns or more, or 1.3 turns or more, and may be 1.6 turns or less, 1.5 turns or less, or 1.4 turns or less.

Particularly, the term 1 turn may mean the length needed for 360° winding of the separator included in the electrode assembly from a reference point, and the length may be determined according to the outer diameter of a mandrel used for winding the electrode assembly, the thicknesses of the first separator, the rigid film, and the second separator, and the number of times of winding of the first separator, the rigid film, and the second separator located inside. For example, the term 1 turn may mean the length needed for winding the first separator 360° in the direction in which the jelly-roll type electrode assembly is wound from the end portion in the longitudinal direction of the first separator.

If the length in the longitudinal direction of the first area satisfies the foregoing range, the winding of the electrode assembly can be attained more easily by adjusting the distance between one end portion in the longitudinal direction of the separator and one end portion in the longitudinal direction of the rigid film. If the length in the longitudinal direction of the first area is less than 1 turn, the tension for continuous winding may not be sufficient in the winding using a mandrel.

According to an aspect of the present disclosure, the core portion of the jelly-roll type electrode assembly may further include a third area having a lamination structure of a first separator and a second separator. Specifically, the core portion of the jelly-roll type electrode assembly may include: a first area having a lamination structure of a first separator and a second separator; a second area having a lamination structure of a first separator, a rigid film, and a second separator; and a third area having a lamination structure of a first separator and a second separator. More specifically, the length in the longitudinal direction of the first area may be L1, the length in the longitudinal direction of the second area may be L2, and the length in the longitudinal direction of the third area may be L3. The core portion (C) may mean a region having a sum of the length L1 in the longitudinal direction of the first area, the length L2 in the longitudinal direction of the second area, and the length L3 in the longitudinal direction of the third area, that is, the length in the longitudinal direction of L1+L2+L3, with L3>0.

In such a case, one end portion in the longitudinal direction of the rigid film and one end portion in the longitudinal direction of the negative electrode may not be in contact with each other, and as described below, the distance between one end portion in the longitudinal of the rigid film and one end portion in the longitudinal direction of the negative electrode can be adjusted to minimize the damage to the separator caused by the end portion of the electrode or rigid film even during the contraction/expansion of the electrode assembly.

According to an aspect of the present disclosure, the length in the longitudinal direction of the rigid film may be 100% to 150% based on 100% of the inner circumference of the jelly-roll type electrode assembly. Specifically, the length in the longitudinal direction of the rigid film may be 105% or more, 110% or more, 115% or more, or 120% or more, and 145% or less, 140% or less, 135% or less, or 130% or less, based on 100% of the inner circumference of the jelly-roll type electrode assembly.

Particularly, the term "inner circumference" may refer to the circumference of an imaginary circle, of which the radius has the largest value among the distances from the winding axis of the electrode assembly to the innermost layer in contact with the hollow portion of the electrode assembly, and the length may be determined according to the outer diameter of the mandrel used for winding of the electrode assembly. For example, the inner circumference may have a value of about 10 mm.

According to an aspect of the present disclosure, the length in the longitudinal direction of the rigid film may be 0.9 to 1.4 turns. Specifically, the distance between one end portion in the longitudinal direction of the rigid film and one end portion in the longitudinal direction of the negative electrode may be 1 turn or more or 1.1 turns or more, and 1.3 turns or less or 1.2 turns or less. Referring to FIG. 2, the length in the longitudinal direction of the rigid film may be the same as the length L2 in the longitudinal direction of the second area.

If the length in the longitudinal direction of the rigid film satisfies the foregoing range, the core support effect by the rigid film can be further enhanced, and the reductions in battery capacity and energy density can be minimized, thereby preventing the deterioration of electrochemical characteristics.

According to an aspect of the present disclosure, the tensile strength of the rigid film may be 18 kgf/mm² to 25 kgf/mm². Specifically, the tensile strength of the rigid film may be 19 kgf/mm² or more, 20 kgf/mm² or more, or 21 kgf/mm² or more, and 24 kgf/mm² or less, 23 kgf/mm² or less, or 22 kgf/mm² or less.

Particularly, the tensile strength of the rigid film may be measured by preparing a sample with 20 mm X 100 mm in size and 10 µm in thickness from a film specimen and testing the rigid film sample at room temperature under a speed condition of 2 cm/min using a universal testing machine (UTM).

If the tensile strength of the rigid film satisfies the foregoing range, the core support effect by the rigid film can be further enhanced, and the continuous production of electrode assemblies can be achieved using existing roll-to-roll processing equipment, thereby ensuring productivity and economic efficiency.

According to an aspect of the present disclosure, the core portion of the jelly-roll type electrode assembly may have a length in the longitudinal direction of 2 to 3 turns. Specifically, the core portion of the jelly-roll type electrode assembly may have a length in the longitudinal direction of 2.1 turns or more, 2.2 turns or more, 2.3 turns or more, 2.4 or turns or more, or 2.5 turns or more, and a length in the longitudinal direction of 2.9 turns or less, 2.8 turns or less, 2.7 turns or less, 2.6 turns or less, or 2.5 turns or less.

Referring to FIG. 2, the length in the longitudinal direction of the core portion may be the same as the sum of L1, the length in the longitudinal length of the first area and L2, the length in the longitudinal direction of the second area, or the sum of L1, the length in the longitudinal length of the first area, L2, the length in the longitudinal direction of the second area, and L3, the length in the longitudinal direction of the third area.

If the length in the longitudinal direction of the core portion satisfies the foregoing range, a space sufficient for the arrangement of the rigid film can be ensured, and the core support effect by the rigid film can be further enhanced.

According to an aspect of the present disclosure, the distance between one end portion in the longitudinal direction of the rigid film and one end portion in the longitudinal direction of the negative electrode may be 0.5 turns or less. Specifically, the distance between one end portion in the longitudinal direction of the rigid film and one end portion in the longitudinal direction of the negative electrode may be 0.4 turns or less or 0.3 turns or less. Referring to FIG. 2, the distance between one end portion in the longitudinal direction of the rigid film and one end portion in the longitudinal direction of the negative electrode may be the same as the length L3 in the longitudinal direction of the third area.

In such a case, one end portion in the longitudinal direction of the rigid film and one end portion in the longitudinal direction of the negative electrode may be in contact with each other, and the thicknesses of the rigid film and the negative electrode can be adjusted to minimize the step difference caused by a thickness difference between the electrode and the rigid film.

According to an aspect of the present disclosure, the distance between one end portion in the longitudinal direction of the rigid film and one end portion in the longitudinal direction of the negative electrode may be 0.3 to 0.7 turns. Specifically, the distance between one end portion in the longitudinal direction of the rigid film and one end portion in the longitudinal direction of the negative electrode may be 0.4 turn or more or 0.5 turns or more, and 0.6 turns or less or 0.5 turns or less. Referring to FIG. 2, the distance between one end portion in the longitudinal direction of the rigid film and one end portion in the longitudinal direction of the negative electrode may be the same as the length L3 in the longitudinal direction of the third area.

In a such case, one end portion in the longitudinal direction of the rigid film and one end portion in the longitudinal direction of the negative electrode may not be in contact with each other, and the distance between one end portion in the longitudinal direction of the rigid film and one end portion in the longitudinal direction of the negative electrode can be adjusted to minimize the damage to the separator caused by the end portion of the electrode or rigid film even during the contraction/expansion of the electrode assembly.

According to an aspect of the present disclosure, the rigid film may further include a fixing member on at least one surface thereof. Specifically, the fixing member is used for minimizing the sliding of the rigid film, and an adhesive or adhesive tape may be used therefor. The further inclusion of the fixing member can minimize the damage to the separator due to the end portion of the electrode or the rigid film even during the contraction/expansion of the electrode assembly or the sliding of the rigid film.

According to an aspect of the present disclosure, the length in the widthwise direction of the rigid film may be 95% to 105% based on 100% of the length in the widthwise direction of the jelly-roll type electrode assembly. Specifically, the length in the widthwise direction of the rigid film may be 96% or more, 97% or more, 98% or more, 99% or more, or 100% or more, and 104% or less, 103% or less, 102% or less, 101% or less, or 100% or less, based on 100% of the length in the widthwise direction of the jelly-roll type electrode assembly.

If the length in the widthwise direction of the rigid film satisfies the foregoing range, the length of the rigid film may correspond to the length in the widthwise direction of the jelly-roll type electrode assembly, and this condition is advantageous in the supporting of the jelly-roll type electrode assembly and can attain an excellent core deformation preventing effect.

If the length in the widthwise direction of the rigid film is too short, it may reduce the core deformation preventing effect. If the rigid film is excessively exposed in the widthwise direction of the jelly-roll type electrode assembly, it may cause increased defects during the insertion process into the battery case and local problems, such as lithium precipitation due to step difference formation.

According to an aspect of the present disclosure, the rigid film may include at least one selected from polypropylene, polyethylene, polyesters, or polyamides. Specifically, the rigid film may include at least one selected from polypropylene (PP), polyethylene (PE), polyethylene terephthalate (PET), or polyamides (PAs). For example, the rigid film may include polypropylene (PP).

When the rigid film is formed of the foregoing type of materials, the rigidity of the rigid film can be sufficient to support the core portion of the jelly-roll type electrode assembly, and the rigidity of the rigid film can be more suitable for roll-to-roll processing, thereby improving the productivity and economic efficiency of the jelly-roll type electrode assembly.

According to an aspect of the present disclosure, the thickness of the rigid film may be 5% to 20% based on 100% of the thickness of the negative electrode. Specifically, the thickness of the rigid film may be 6% or more, 7% or more, 8% or more, 9% or more, or 10% or more, and 19% or less, 18% or less, 17% or less, 16% or less, or 15% or less, based on 100% of the thickness of the negative electrode.

If the thickness of the rigid film satisfies the foregoing range, the step difference can be minimized by the adjustment of the thickness range of the rigid film. In other words, local problems can be minimized, such as, the formation of step difference due to the thickness difference between the rigid film and the negative electrode and the precipitation of lithium in the step difference formation area.

According to an aspect of the present disclosure, the thickness of the rigid film may be 10 µm to 50 µm. Specifically, the thickness of the rigid film may be 15 µm or more, 20 µm or more, or 25 µm or more, and 45 µm or less, 40 µm or less, or 35 µm or less.

If the thickness of the rigid film satisfies the foregoing range, the rigidity of the rigid film can be sufficient to support the core portion of the jelly-roll type electrode assembly, and the rigidity of the rigid film can be more suitable for roll-to-roll processing, thereby improving the productivity and economic efficiency of the jelly-roll type electrode assembly.

According to an aspect of the present disclosure, the positive electrode may include: a positive electrode current collector; and a positive electrode active material layer provided on at least one surface of the positive electrode current collector, wherein the positive electrode current collector and the positive electrode active material layer may have ends in the longitudinal direction at the same position. In other words, one end in the longitudinal direction of the positive electrode may have a free-edge form.

Through this, the area of unnecessary non-coating portions of the positive electrode current collector can be reduced to ensure economic efficiency, and a slitting process can be performed after the formation of the active material layer on the electrode, thereby performing roll-to-roll processing including a slitting process and a winding process more efficiently.

The term "same position" means that the lengths of end portions in the longitudinal direction are the same as each other, and may include the substantial formation of end portions at the same positon due to a process error that may occur in the slitting process or the like.

According to an aspect of the present disclosure, the positive electrode current collector may include a positive electrode coating portion where a positive electrode active material is coated, and a positive electrode non-coating portion where a positive electrode active material is not coated. A tab may be included on the positive electrode non-coating portion. Specifically, the positive electrode current collector may include a positive electrode non-coating portion, and may include a positive electrode tab formed on the positive electrode non-coating portion.

According to an aspect of the present disclosure, the positive electrode current collector is not particularly limited as long as the positive electrode collector does not cause chemical changes in a battery while having conductivity, and, specifically, stainless steel, aluminum, nickel, titanium, fired carbon, or aluminum or stainless steel that is surface-treated with carbon, nickel, titanium, silver, or the like may be used as the positive electrode current collector. That is, the positive electrode current collector may be provided in the form of surface-treated stainless steel, aluminum foil, or the like.

Additionally, the positive electrode current collector may typically have a thickness of 5 to 30 µm, and fine irregularities may be formed on the surface of the collector to enhance the adhesive strength of the positive electrode active material. For example, the positive electrode current collector may be used in various forms, such as a film, a sheet, a foil, a net, a porous body, a foam body, and a non-woven fabric body.

According to an aspect of the present disclosure, the positive electrode active material may be a commonly used positive electrode active material. Specifically, examples of the positive electrode active material may include: layered compounds, such as lithium cobalt oxide (LiCoO₂) or lithium nickel oxide (LiNiO₂), or compounds substituted with one or more transition metals; lithium iron oxides such as LiFe₃O₄; lithium manganese oxides, such as compounds of Formula Li₁₊ₓMn₂₋ₓO₄ (0≦x≦0.33), LiMnO₃, LiMn₂O₃ or LiMnO₂; lithium copper oxide (Li₂CuO₂); vanadium oxides, such as LiV₃O₈, V₂O₅ or Cu₂V₂O₇; Ni-site type lithiated nickel oxides represented by a chemical formula of LiNi_{1-y}M_{y}O₂ (M is at least one selected from the group consisting of Co, Mn, Al, Cu, Fe, Mg, B and Ga, and 0.01≦y≦0.3); lithium manganese composite oxides represented by a chemical formula of LiMn_{2-z}M_{z}O₂ (M is at least one selected from the group consisting of Co, Ni, Fe, Cr, Zn, and Ta, and 0.01≦z≦0.1) or a chemical formula of Li₂Mn₃MO₈ (M is at least one selected from the group consisting of Fe, Co, Ni, Cu, and Zn); LiMn₂O₄ wherein some of Li is substituted with alkaline earth metal ions; or the like, but are not limited thereto. The positive electrode may be a Li-metal.

According to an aspect of the present disclosure, the positive electrode active material may further include a positive electrode conductive material and a positive electrode binder. The positive electrode conductive material is used to impart conductivity to the positive electrode, and any conductive material that does not cause chemical changes in the configured battery while having electron conductivity may be used without particular limitation. Specifically, examples of the positive electrode conductive material may include: graphite, such as natural graphite, artificial graphite; carbon-based materials, such as carbon black, acetylene black, Ketjen black, channel black, furnace black, lamp black, thermal black, or carbon fibers; a powder or a fiber of a metal, such as copper, nickel, aluminum, or silver; conductive whiskers, such as zinc oxide whiskers or potassium titanate; conductive metal oxides, such as titanium oxide; or conductive polymers, such as polyphenylene derivatives, and one alone or a mixture of two or more of the above materials may be used.

The positive electrode binder serves to enhance the adhesive strength between the positive electrode active material particles and the adhesive strength between the positive electrode active material and the positive electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and one alone and a mixture of two or more of these may be used.

According to an aspect of the present disclosure, the negative electrode may include a negative electrode current collector and a negative electrode active material layer provided on the negative electrode current collector. Specifically, the negative electrode may include a negative electrode current collector and a negative electrode active material layer formed on one or both surfaces of the negative electrode current collector and containing a negative electrode active material. In other words, the negative electrode active material layer may be formed on a negative electrode coating portion of the negative electrode current collector, and the surface where the negative electrode active material layer is not provided may be expressed as a negative electrode non-coating portion.

According to an aspect of the present disclosure, the negative electrode current collector may include a negative electrode coating portion where a negative electrode active material layer is formed, and a negative electrode non-coating portion where a negative electrode active material layer is not formed, and may include a tab on the negative electrode non-coating portion. Specifically, the negative electrode current collector may include a negative electrode non-coating portion, and may include a negative electrode tab formed on the negative electrode non-coating portion. Therefore, the manufactured electrode assembly may include at least one negative electrode tab.

According to an aspect of the present disclosure, the negative electrode active material layer may contain a negative electrode active material including at least one selected from the group consisting of a silicon-based material and a carbon-based material. The negative electrode active material layer may further include a negative electrode conductive material and a negative electrode binder, and the negative electrode active material, the negative electrode conductive material, and the negative electrode binder may be formed of materials that are used in the art, without limitation.

According to an aspect of the present disclosure, the negative electrode current collector is not particularly limited as long as the negative electrode current collector does not cause a chemical change in the battery while having conductivity. For example, copper, stainless steel, aluminum, nickel, titanium, fired carbon, or aluminum or stainless steel that is surface-treated with carbon, nickel, titanium, silver, or the like may be used as the negative electrode current collector. Specifically, transition metals that adsorb carbon well, such as copper and nickel, may be used as the negative electrode current collector. The thickness of the negative electrode current collector may be 5 µm to 30 µm, but the thickness of the negative electrode current collector is not limited thereto.

According to an aspect of the present disclosure, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, an ethylene-propylene-diene monomer (EPDM), sulfonated EPDM, styrene butadiene rubber (SBR), fluororubber, polyacrylic acid, and polymers in which hydrogen of the above-mentioned materials is substituted with Li, Na, Ca, or the like, and may also include various copolymers of theses.

According to an aspect of the present disclosure, the negative electrode conductive material is not particularly limited so long as it does not cause chemical changes in corresponding batteries while having conductivity. Examples thereof may include: graphite, such as natural graphite or artificial graphite; carbon black, such as acetylene black, Ketjen black, channel black, furnace black, lamp black, or thermal black; conductive fibers, such as carbon fibers or metallic fibers; conductive tubes, such as carbon nanotubes; metallic powders, such as carbon fluoride powder, aluminum powder, or nickel powder; conductive whiskers, such as zinc oxide or potassium titanate; conductive metal oxides, such as titanium oxide; or conductive materials, such as polyphenylene derivatives.

According to an aspect of the present disclosure, the jelly-roll type electrode assembly may include a plurality of separators. For example, the jelly-roll type electrode assembly may have a structure in which a separator/negative electrode/separator/positive electrode are sequentially laminated. The separator serves to separate the negative electrode and the positive electrode and provides a passage for the migration of lithium ions. A material for the separator is not particularly limited as long as it is a material commonly used as a separator for a secondary battery. For example, a material that has a low resistance to the migration of electrolyte ions and is well impregnated in an electrolyte may be used. Specifically, a porous polymer film, for example, a porous polymer film formed of a polyolefin-based polymer, such as an ethylene homopolymer, a propylene homopolymer, an ethylene/butene copolymer, an ethylene/hexene copolymer, or an ethylene/methacrylate copolymer; or a laminated structure having two or more layers formed of these polymers may be used. Alternatively, a typical porous non-woven fabric, for example, a non-woven fabric composed of high-melting-point glass fiber, polyethylene terephthalate fiber, or the like may be used. Additionally, for ensuring heat resistance or mechanical strength, the separator may include a coating layer formed by coating a slurry containing a ceramic component or polymeric component on a base layer formed of the foregoing separator material, and may selectively have either a single-layer structure or a multi-layer structure. The thickness of the separator may be 10 µm to 20 µm, but is not limited thereto.

According to another aspect of the present disclosure, there is provided a method for manufacturing a jelly-roll type electrode assembly including a first separator, a negative electrode, a second separator, and a positive electrode, which are sequentially laminated and wound, the method including: (a) winding a first separator and a second separator; (b) introducing a rigid film between the first separator and the second separator; (c) introducing a negative electrode; and (d) introducing a positive electrode, wherein: the length in the longitudinal direction of the rigid film is 100% to 150% based on 100% of the inner circumference of the jelly-roll type electrode assembly; and the tensile strength of the rigid film is 18 kgf/mm² to 25 kgf/mm².

The method for manufacturing a jelly-roll type electrode assembly according to an aspect of the present disclosure can produce a jelly-roll type electrode assembly including a rigid film through a continuous process using existing roll-to-roll processing equipment, thereby ensuring productivity and economic efficiency.

Furthermore, the jelly-roll type electrode assembly obtained by the manufacturing method includes a rigid film, which has a predetermined degree of rigidity, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

According to an aspect of the present disclosure, the length in the longitudinal direction of the rigid film may be 100% to 150% based on 100% of the inner circumference of the jelly-roll type electrode assembly. Specifically, the length in the longitudinal direction of the rigid film may be 105% or more, 110% or more, 115% or more, or 120% or more, and 145% or less, 140% or less, 135% or less, or 130% or less, based on 100% of the inner circumference of the jelly-roll type electrode assembly.

If the length in the longitudinal direction of the rigid film satisfies the foregoing range, the core support effect by the rigid film can be further enhanced, and the reductions in battery capacity and energy density can be minimized, thereby preventing the deterioration of electrochemical characteristics.

According to an aspect of the present disclosure, the tensile strength of the rigid film may be 18 kgf/mm² to 25 kgf/mm². Specifically, the tensile strength of the rigid film may be 19 kgf/mm² or more, 20 kgf/mm² or more, or 21 kgf/mm² or more, and 24 kgf/mm² or less, 23 kgf/mm² or less, or 22 kgf/mm² or less.

If the tensile strength of the rigid film satisfies the foregoing range, the core support effect by the rigid film can be further enhanced, and the continuous production of electrode assemblies can be achieved using existing roll-to-roll processing equipment, thereby ensuring productivity and economic efficiency.

Particularly, the meanings of the core portion and the inner circumference and the method for measuring the tensile strength of the rigid film may be as described with respect to the jelly-roll type electrode assembly. In addition, the meanings of the first area to the third area included in the core portion, the length of the first area (L1), the length of the second area (L2), the length of the third area (L3), and the length in the longitudinal direction of the core portion (L1+L2+L3) are as described with respect to the jelly-roll type electrode assembly.

According to an aspect of the present disclosure, the method for manufacturing the jelly-roll type electrode assembly may be performed by roll-to-roll processing. Specifically, steps (a) to (d) may be performed by roll-to-roll processing, in which multiple flexible metal foils or the like are processed while traveling between rollers.

Particularly, the roll-to-roll processing may mean a manner in which a flexible and thin metal sheet-like electrode current collector wound around a roll is unwound to supply the electrode current collector, an electrode slurry containing an electrode active material is coated and dried on at least one surface of the electrode current collector to form an electrode mixture layer, and then the processed electrode current collector is again wound around another roll and recycled.

The term "introducing" may refer to a series of introduction and winding steps performed during the manufacturing of an electrode assembly by roll-to-roll processing, that is, the term may mean a part of the winding process. Specifically, the term may mean a process of introducing a film or electrode, which is to be additionally wound, between a plurality of separators, each of which is wound around a mandrel by starting from one end portion in the longitudinal direction to a part of the length in the longitudinal direction, or on one surface of each of a plurality of separators partially wound around a mandrel. Alternatively, the term may mean a process of manufacturing an electrode assembly by continuously winding the introduced film or electrode along with the plurality of separators partially wound, and may involve a slitting process of cutting a part of the length in the longitudinal direction as needed.

The method for manufacturing a jelly-roll type electrode assembly according to an aspect of the present disclosure can continuously produce jelly-roll type electrode assemblies including the rigid film by using existing roll-to-roll processing equipment. In other words, in the method for manufacturing the jelly-roll type electrode assembly, step (b) may be performed after step (a) and before step (c), and thus the entire process may be performed by roll-to-roll processing used in the art.

That is, the method for manufacturing a jelly-roll type electrode assembly according to an aspect of the present disclosure can continuously produce jelly-roll type electrode assemblies including a rigid film having a predetermined degree of rigidity, by using existing roll-to-roll processing equipment, thereby ensuring productivity and economic efficiency.

FIG. 2 schematically shows a method for manufacturing a jelly-roll type electrode assembly including a rigid film according to an aspect of the present disclosure.

Referring to FIG. 2, step (a) may be winding a first separator and a second separator. After the first separator and the second separator are wound to a predetermined length using a mandrel, step (b) may be performed.

That is, a rigid film may be introduced between the first and second separators wound to a predetermined length. Through this, the core portion of the jelly-roll type electrode assembly may not include the positive electrode and the negative electrode, and one surface and the other surface of the rigid film may not be in direct contact with the negative electrode or the positive electrode.

Through step (b), the rigid film may have a predetermined length, and the core portion of the jelly-roll type electrode assembly including the rigid film may also have a predetermined length.

Then, steps (c) and (d) may be performed sequentially.

According to an aspect of the present disclosure, step (c) may be introducing the negative electrode, and specifically, introducing the negative electrode between the first separator and the second separator.

Particularly, one end portion in the longitudinal direction of the rigid film and one end portion in the longitudinal direction of the negative electrode may not be in contact with each other, and the distance between one end portion in the longitudinal direction of the rigid film and one end portion in the longitudinal direction of the negative electrode can be adjusted to minimize the damage to the separator, caused by the end portion of the electrode or rigid film, even during the contraction/expansion of the electrode assembly.

On the other hand, when one end portion in the longitudinal direction of the rigid film is in contact with one end portion in the longitudinal direction of the negative electrode are in contact with each other, the thickness range of the rigid film can be adjusted to minimize the step difference, thereby minimizing local problems, such as lithium precipitation in a step difference formation region.

According to an aspect of the present disclosure, the length in the widthwise direction of the rigid film may be 95% to 105% based on 100% of the length in the widthwise direction of the jelly-roll type electrode assembly. Specifically, the length in the widthwise direction of the rigid film may be 96% or more, 97% or more, 98% or more, 99% or more, or 100% or more, and 104% or less, 103% or less, 102% or less, 101% or less, or 100% or less, based on 100% of the length in the widthwise direction of the jelly-roll type electrode assembly.

If the length in the widthwise direction of the rigid film satisfies the foregoing range, the length of the rigid film may correspond to the length in the widthwise direction of the jelly-roll type electrode assembly, and this condition is advantageous in the supporting of the core portion of the jelly-roll type electrode assembly and can attain an excellent core deformation preventing effect.

According to an aspect of the present disclosure, the rigid film may include at least one selected from polypropylene, polyethylene, polyesters, or polyamides. Specifically, the rigid film may include at least one selected from polypropylene (PP), polyethylene (PE), polyethylene terephthalate (PET), or polyamides (PAs). For example, the rigid film may be polypropylene (PP).

When the rigid film is formed of the foregoing type of materials, the rigidity of the rigid film can be sufficient to support the core portion of the jelly-roll type electrode assembly, and the rigidity of the rigid film can be more suitable for roll-to-roll processing, thereby improving the productivity and economic efficiency of the jelly-roll type electrode assembly.

According to an aspect of the present disclosure, the thickness of the rigid film may be 5% to 20% based on 100% of the thickness of the negative electrode. Specifically, the thickness of the rigid film may be 6% or more, 7% or more, 8% or more, 9% or more, or 10% or more, and 19% or less, 18% or less, 17% or less, 16% or less, or 15% or less, based on 100% of the thickness of the negative electrode.

If the thickness of the rigid film satisfies the foregoing range, the step difference can be minimized by the adjustment of the thickness range of the rigid film. In other words, local problems can be minimized, such as, the formation of step difference due to the thickness difference between the rigid film and the negative electrode and the precipitation of lithium in the step difference formation area.

According to an aspect of the present disclosure, the thickness of the rigid film may be 10 µm to 50 µm. Specifically, the thickness of the rigid film may be 15 µm or more, 20 µm or more, or 25 µm or more, and 45 µm or less, 40 µm or less, or 35 µm or less.

If the thickness of the rigid film satisfies the foregoing range, the rigidity of the rigid film can be sufficient to support the core portion of the jelly-roll type electrode assembly, and the rigidity of the rigid film can be more suitable for roll-to-roll processing, thereby improving the productivity and economic efficiency of the jelly-roll type electrode assembly.

An aspect of the present disclosure provides a jelly-roll type electrode assembly that is produced by the above-described jelly-roll type electrode assembly manufacturing method.

The jelly-roll type electrode assembly according to an aspect of the present disclosure includes a rigid film having a predetermined degree of rigidity, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

An aspect of the present disclosure provides a secondary battery including: the jelly-roll type electrode assembly; and a battery case for accommodating the electrode assembly. Specifically, the secondary battery may include an electrode assembly according to the foregoing aspect and a battery case for accommodating the electrode assembly.

In the secondary battery according to the present disclosure, the hollow section of the core portion is supported to maintain its circular shape even in the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

According to an aspect of the present disclosure, the battery case may have a cylindrical shape. Specifically, the battery case may have a cylindrical, square, or pouch shape according to use thereof, but is not limited thereto.

According to an aspect of the present disclosure, an electrolyte may be included inside the battery case. Specifically, examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, or the like, which can be used to manufacture lithium secondary batteries, but are not limited thereto. Specifically, the electrolyte may include a non-aqueous organic solvent and a lithium salt.

According to an aspect of the present disclosure, examples of the non-aqueous organic electrolyte may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, or ethyl propionate.

According to an aspect of the present disclosure, the metal salt may be a lithium salt, and a material that is favorably dissolved in the non-aqueous electrolyte may be used as the lithium salt. For example, at least one selected from the group consisting of F⁻, Cl⁻, I⁻, NO₃⁻, N(CN)²⁻, BF₄-, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

According to an aspect of the present disclosure, for the purpose of improving service life characteristics of the battery, preventing the reduction in battery capacity, and increasing the discharge capacity of the battery, the electrolyte may further include at least one additive, for example, a haloalkylene carbonate-based compound such as difluoroethylene carbonate, pyridine, triethylphosphite, triethanolamine, a cyclic ether, ethylenediamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, in addition to the electrolyte components.

An aspect of the present disclosure provides a battery module including the secondary battery as a unit cell and a battery pack including the same. The battery module and the battery pack include the secondary battery having improved high capacity and excellent battery stability and service life characteristics, and thus can be used as a power source for medium- and large-sized devices selected from the group consisting of electric vehicles, hybrid electric vehicles, plug-in hybrid electric vehicles, and power storage systems.

### Examples

Hereinafter, exemplary aspects will be described for better understanding of the present disclosure. However, the exemplary aspects according to the present disclosure may be modified in many different forms, and the scope of the present disclosure shall not be construed as being limited to the exemplary aspects described below. The exemplary aspects of the present disclosure are provided to illustrate aspects of the present disclosure more completely to those skilled in the art.

### Example 1

### Manufacture of electrode assembly

A positive electrode active material slurry was prepared by adding Li(Ni_{0.93}Co_{0.01}Mn_{0.03}Al_{0.03})O₂ as a positive electrode material, CNT as a positive electrode conductive material, and polyvinylidenefluoride (PVDF) as a binder to N-methyl-2-pyrrolidone (NMP) at a weight ratio of 98.2:0.8:1.0. The positive electrode active material slurry was coated on an aluminum current collector with a thickness of 15 µm and a length of 64 mm in a widthwise direction, followed by drying and then roll pressing, to form a positive electrode active material layer, thereby preparing a positive electrode with a thickness of 175 µm.

Then, natural graphite (C, average particle size of 10 µm, POSCO Chemical) and SiO (average particle size (D₅₀) of 5 µm) at a weight ratio of 95:5 (5 wt% of SiO) were prepared as a negative active material. The negative active material, carbon black as a conductive material, and a mixture of styrene butadiene rubber (SBR) and carboxymethyl cellulose (CMC) as a first binder were mixed at a weight ratio of 98:1:1 to prepare a negative active material composition. Thereafter, 7.8 g of distilled water was introduced into 5 g of the negative active material composition, followed by stirring, to prepare a negative active material slurry. The negative active material slurry was coated on a copper (Cu) metal thin film, as a negative current collector, with a thickness of 10 µm and a length of 65 mm in the widthwise direction, followed by drying (a drying temperature of 120°C, 1 minute), to form a negative electrode with an average thickness of 185 µm. At this time, the temperature of the circulated air was 60°C.

Thereafter, a rigid film of a polypropylene (PP) material with a length of 65 mm in the widthwise direction, a length of 15 mm in the longitudinal direction, and a thickness of 50 µm, and two sheets of separators including first and second separators of a polyethylene (PE) material with a thickness of 13 µm were prepared, respectively. At this time, a sample of 20 mm X 100 mm in size and 10 µm in thickness from the rigid film was prepared, and then tested for the tensile strength at room temperature under a speed condition of 2 cm/min by using a universal testing machine (UTM). The measured tensile strength was 25 kgf/mm².

Thereafter, the first separator and the second separator were sequentially arranged and wound using a mandrel with a diameter of 3.4 mm, and then the rigid film was introduced between the first separator and the second separator, followed by further winding.

After the rigid film was completely wound, the negative electrode and the positive electrode were sequentially introduced at a distance of 6 mm from the rigid film, followed by winding. Seal tapes of a PET material was attached and finished at end portions where winding was completed, while wrapping outer circumferential surfaces of the top end and bottom end of the jelly-roll, thereby manufacturing a jelly-roll type electrode assembly. At this time, the inner circumference of the jelly-roll type electrode assembly was about 12 mm, and the length from the end portion in the longitudinal direction of the negative electrode to the end portion in the longitudinal direction of the first separator was about 15 mm.

### Manufacture of secondary batteries

The jelly-roll type electrode assembly was inserted into a cylindrical battery case. Thereafter, an electrolyte solution, obtained by mixing ethylene carbonate (EC), ethyl methyl carbonate (EMC), and dimethyl carbonate (DMC) at a volume ratio of 20:50:30 and dissolving LiPF₆ to 1.3 M in the mixture, was injected into the battery case, and then the can of the cylindrical battery can be sealed with a cap assembly, thereby manufacturing a secondary battery.

### Example 2

A jelly-roll type electrode assembly and a secondary battery were manufactured by the same method as in Example 1 except that a film of a polyethylene (PE) material was used as the rigid film.

At this time, a sample of 20 mm X 100 mm in size and 10 µm in thickness from the polyethylene (PE) film was prepared, and then tested for the tensile strength at room temperature under a speed condition of 2 cm/min by using a universal testing machine (UTM). The measured tensile strength was 18 kgf/mm².

### Comparative Example 1

A jelly-roll type electrode assembly and a secondary battery were manufactured by the same method as in Example 1 except that a rigid film was not introduced.

### Comparative Example 2

A jelly-roll type electrode assembly and a secondary battery were manufactured by the same method as in Example 1 except that a film of a polyimide (PI) material was used as the rigid film. At this time, a sample of 20 mm X 100 mm in size and 10 µm in thickness from the PI film was prepared, and then tested for the tensile strength at room temperature under a speed condition of 2 cm/min by using a universal testing machine (UTM). The measured tensile strength was 10 kgf/mm².

### Comparative Example 3

A jelly-roll type electrode assembly and a secondary battery were manufactured by the same method as in Example 1 except that a film having a length of 30 mm in the longitudinal direction was used as the rigid film.

### Experimental Examples

### Experimental Example 1: Evaluation of cycle stability

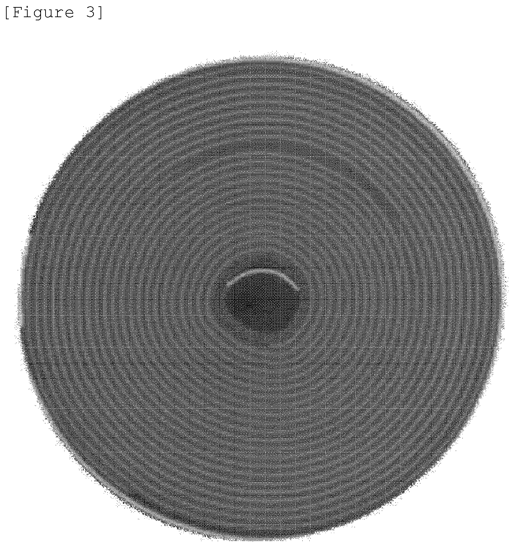

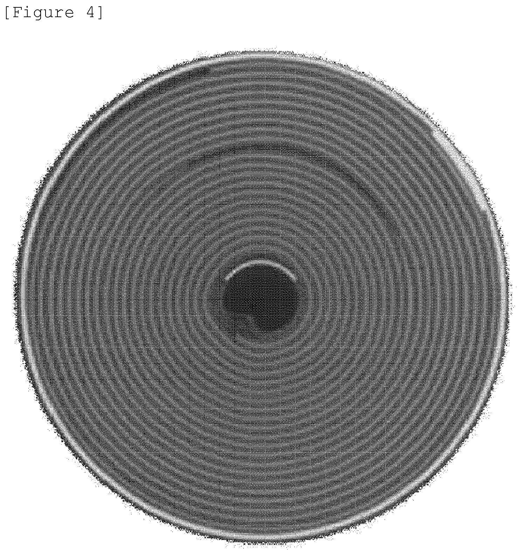

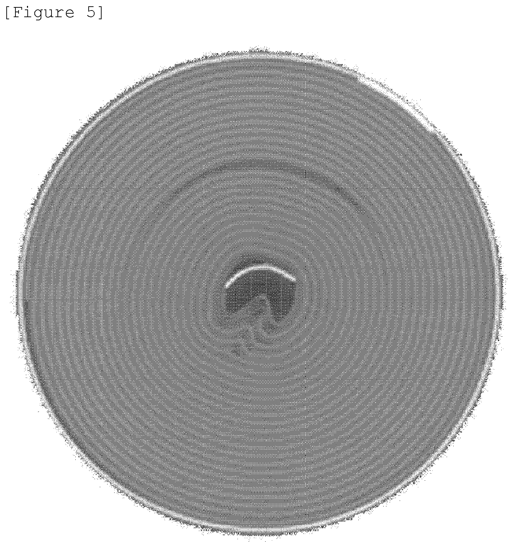

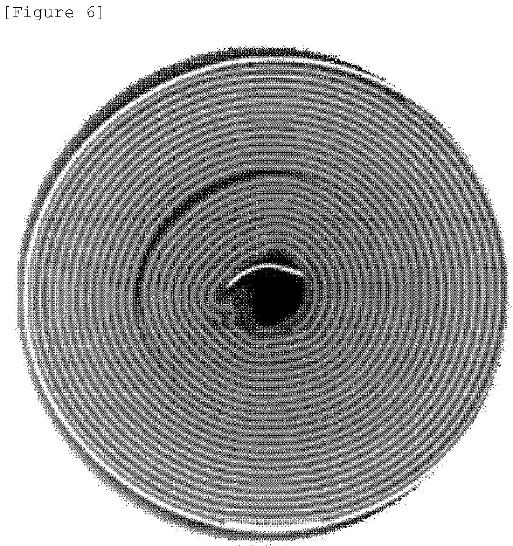

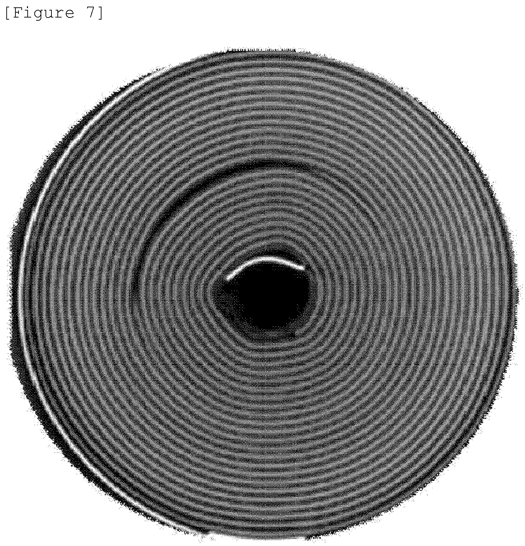

The secondary batteries manufactured in the examples and the comparative examples were subjected to cycle test at 4.2-2.85 V 0.5 C/0.5 C under 25°C conditions by using an electrochemical charger/discharger. After 50 cycles, the core portions were checked for core deformation by computed tomography (CT), thereby evaluating cycle stability, and the images thereof are shown in FIGS. 3 to 7, respectively.

### Experimental Example 2: Evaluation of service life

The secondary batteries manufactured in the examples and comparative examples were tested for service life by using an electrochemical charger/discharger, and the capacity retention rate was evaluated. The secondary batteries were subjected to cycle test at 4.2-2.85 V, 1 C/1 C, and the capacity retention rate was measured by charging/discharging the secondary batteries at 0.2 C/0.2 C (4.2-2.85 V) every 100 cycles during the test. The results are shown in Table 1. Service life retention rate (%) = {(Discharge capacity in the Nth cycle)/(Discharge capacity in the 1st cycle)}×100

### Experimental Example 3: Evaluation of resistance increase rate

After the capacity retention rates were measured by charging/discharging at 0.2 C/0.2 C (4.2-2.85 V) every 100 cycles during the test in Experimental Example 2, the resistance increase rates were compared and analyzed by discharging at 0.5 C pulse in SOC 50 to measure the resistance. The results are shown in Table 1.

**TABLE 1**

| | Capa. (mAh) @1 cycle 0.2 C/0.2 C, 4.2-2.85 V @25 °C | Capa. Retention @300 cycle 0.2 C/0.2 C, 4.2-2.85 V @25 °C | Resistance Increase % @300 cycle(SOC 50) |
|---|---|---|---|
| Example 1 | 5312 | 92.2 | 13.3 |
| Example 2 | 5296 | 91.1 | 14.5 |
| Comparative Example 1 | 5279 | 84.5 | 36.1 |
| Comparative Example 2 | 5305 | 89.6 | 18.9 |
| Comparative Example 3 | 5011 | 90.8 | 19.2 |

Referring to Table 1 and FIGS. 3 to 7, the secondary batteries according to an aspect of the present disclosure included a rigid film in the core portion, leading to a reduction in core deformation, thereby expressing designed capacities and ensuring improved service life and resistance characteristics. However, when a rigid film is not included as in Comparative Examples 1 to 3 or a film with a tensile strength of 18 kgf/mm² or less and thus weak rigidity, such a film incurred core deformation, resulting in an increase in resistance in battery and a deterioration in service life characteristics. Moreover, an excessive increase in the length in the longitudinal direction of the rigid film resulted in a decrease in the length in the longitudinal direction of the electrode, thus reducing the design capacity and the actual expressible discharge capacity.

It can be therefore seen that the jelly-roll type electrode assembly and the secondary battery including the same according to an aspect of the present disclosure include a rigid film with a predetermined degree of rigidity in the core portion, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and service life characteristics.

The foregoing detailed description is intended to illustrate and explain aspects of the present disclosure. In addition, the foregoing description is only to show and describe the aspects of the present disclosure, and as described above, the present disclosure can be used in various other combinations, changes and environments, and can be changed and modified within the scope of the concepts disclosed in the present disclosure, within the scope equivalent to the above disclosure and/or within the scope of skill or knowledge in the art. Accordingly, the foregoing detailed description is not intended to limit the disclosure to the disclosed aspects. Furthermore, the appended claims should be construed to include other aspects as well.

### Industrial Applicability

The jelly-roll type electrode assembly and the secondary battery including the same according to an aspect of the present disclosure include a rigid film with a predetermined degree of rigidity, so that the hollow section of the core portion is supported to maintain its circular shape against the deformation of the electrode assembly due to the contraction/expansion of the electrode during battery charging/discharging, thereby preventing damage to the positive electrode and the separator and suppressing internal short circuits between the positive electrode and the negative electrode, leading to improvements in battery stability and life characteristics.

### Explanation of Reference Numerals

- 10:: first separator
- 20:: negative electrode
- 30:: second separator
- 40:: positive electrode
- 50:: rigid film
- L1:: length in longitudinal direction of first area
- L2:: length in longitudinal direction of second area

- L3:: length in longitudinal direction of third area

- C:: core portion

## Claims

1. A jelly-roll electrode assembly, comprising a first separator, a negative electrode, a second separator, and a positive electrode, which are sequentially laminated and wound,
wherein a core portion of the jelly-roll electrode assembly comprises a rigid film disposed between the first separator and the second separator,
wherein a length of the rigid film in a longitudinal direction is from 100% to 150% of an inner circumference of the jelly-roll electrode assembly, and
wherein a tensile strength of the rigid film is from 18 kgf/mm² to 25 kgf/mm².

2. The jelly-roll electrode assembly of claim 1, wherein the core portion of the jelly-roll electrode assembly has a length of 2 to 3 turns in the longitudinal direction.

3. The jelly-roll electrode assembly of claim 1, wherein neither the negative electrode nor the positive electrode is included within the core portion of the jelly-roll electrode assembly.

4. The jelly-roll electrode assembly of claim 1, wherein a first surface and a second surface of the rigid film are not in direct contact with the negative electrode or the positive electrode.

5. The jelly-roll electrode assembly of claim 1, wherein a distance between an end portion of the rigid film in the longitudinal direction and an end portion of the negative electrode in the longitudinal direction is 0.3 to 0.7 turns.

6. The jelly-roll electrode assembly of claim 1, wherein a length of the rigid film in a width direction is 95% to 105% of a length of the jelly-roll electrode assembly in the width direction.

7. The jelly-roll electrode assembly of claim 1, wherein the rigid film includes at least one of polypropylene, polyethylene, polyesters, or polyamides.

8. The jelly-roll electrode assembly of claim 1, wherein a thickness of the rigid film is 5% to 20% of a thickness of the negative electrode.

9. The jelly-roll electrode assembly of claim 1, wherein a thickness of the rigid film is 10 µm to 50 µm.

10. The jelly-roll electrode assembly of claim 1, wherein the positive electrode comprises a positive electrode current collector and a positive electrode active material layer provided on at least one surface of the positive electrode current collector, and
the positive electrode current collector and the positive electrode active material layer have end portions at the same position in the longitudinal direction.

11. A method for manufacturing a jelly-roll electrode assembly comprising a first separator, a negative electrode, a second separator, and a positive electrode, which are sequentially laminated and wound, the method comprising:
(a) winding the first separator and the second separator;
(b) introducing a rigid film between the first separator and the second separator;
(c) introducing the negative electrode; and
(d) introducing the positive electrode,
wherein a length of the rigid film in a longitudinal direction is from 100% to 150% of an inner circumference of the jelly-roll electrode assembly, and
a tensile strength of the rigid film is from 18 kgf/mm² to 25 kgf/mm².

12. The method of claim 11, wherein a distance between an end portion of the rigid film in the longitudinal direction and an end portion of the negative electrode in the longitudinal direction is 0.3 to 0.7 turns.

13. The method of claim 11, wherein the rigid film includes polypropylene, polyethylene, polyesters, or polyamides.

14. The method of claim 11, wherein a thickness of the rigid film is from 5% to 20% of a thickness of the negative electrode.

15. The method of claim 11, wherein a thickness of the rigid film is from 10 µm to 50 µm.

16. A jelly-roll electrode assembly manufactured by the method of claim 11.

17. A secondary battery, comprising:
the jelly-roll type electrode assembly of any one of claims 1 to 10 and 16; and
a battery case for accommodating the electrode assembly.

18. The secondary battery of claim 17, wherein the battery case has a cylindrical shape.
